# EUROPÄISCHE PATENTSCHRIFT

(11) **EP 4 347 289 B1**
(45) Veröffentlichungstag und Bekanntmachung des Hinweises auf die Patenterteilung: **01.10.2025**
(21) Anmeldenummer: 22732940.6
(22) Anmeldetag: 30.05.2022
(51) Int. Cl.: B60J 7/00, B60R 11/00

(54) **FESTDACHELEMENT FÜR EIN FAHRZEUGDACH, UMFASSEND EINE FÜHRUNGSSCHIENE ODER EIN SONSTIGES ELEMENT EINES BESCHATTUNGSSYSTEMS**
FIXED ROOF ELEMENT FOR A VEHICLE ROOF, COMPRISING A GUIDE RAIL OR OTHER ELEMENT OF A SHADING SYSTEM
ÉLÉMENT DE TOIT FIXE POUR TOIT DE VÉHICULE, COMPRENANT UN RAIL DE GUIDAGE OU UN AUTRE ÉLÉMENT D'UN SYSTÈME D'OMBRAGE

(30) Priorität: 31.05.2021 DE 102021114030
(43) Veröffentlichungstag der Anmeldung: 10.04.2024
(73) Patentinhaber: Webasto SE, 82131 Stockdorf (DE)
(72) Erfinder: SCHREIBER, Ulrich, 82131 Stockdorf (DE); KNÖPFLE, Julian, 82131 Stockdorf (DE); STIGLER, Ludwig, 82131 Stockdorf (DE); LANG, Johann, 82131 Stockdorf (DE); KACZMAREK, Maciej, 82131 Stockdorf (DE); PRADELLA, Moritz, 82131 Stockdorf (DE); HUTTNER, Eva, 82131 Stockdorf (DE)
(74) Vertreter: advotec.
(86) Internationale Anmeldenummer: PCT/EP2022/064608
(87) Internationale Veröffentlichungsnummer: WO 2022/253754

(56) Entgegenhaltungen:
- DE-A1- 102005 057 741
- DE-A1- 102010 048 257
- DE-A1- 102014 005 476
- DE-A1- 102015 109 862
- DE-A1- 102019 126 312
- DE-U1- 29 820 613

## Beschreibung

Die Erfindung betrifft ein Festdachelement für ein Fahrzeugdach, umfassend die Merkmale des Oberbegriffs des Patentanspruchs 1.

Ein derartiges Festdachelement ist aus der Druckschrift WO 2020/015907 A1 bekannt und stellt ein Dachelement dar, welches Bestandteil eines so genannten Panoramadachs ist und starr bzw. unbeweglich gegenüber einer Fahrzeugkarosserie montiert ist. Dieses Festdachelement umfasst ein flächiges Paneel, das aus einer Glastafel gebildet ist und ein Dachaußenhautelement bildet. An der Unterseite der Glastafel sind Formabschnitte angeformt, welche nach einem Schäumverfahren bzw. einem Spritzgießverfahren ausgebildet sind und jeweils eine nutartige Aufnahme für eine oberseitige Rippe einer Führungsschiene haben, die zur Führung von seitlichen Rändern einer Rollobahn zur Beschattung des Fahrzeuginnenraums dient. Die Führungsschienen sind jeweils als Aluminiumstrangpressprofil ausgebildet. Durch die Ausformung der Rippen an der Oberseite der Führungsschienen ragen die Führungsschienen von dem Glaspaneel weit in Richtung Fahrzeuginnenraum, was zu Lasten der Kopffreiheit von Fahrzeuginsassen geht.

Der Erfindung liegt die Aufgabe zugrunde, ein Festdachelement der einleitend genannten Art zu schaffen, das eine bauraumsparende Anbindung einer Führungsschiene an die Unterseite des flächigen Paneels ermöglicht.

Diese Aufgabe ist erfindungsgemäß durch das Festdachelement mit den Merkmalen des Patentanspruchs 1 gelöst.

Gemäß der Erfindung wird also ein Festdachelement für ein Fahrzeugdach vorgeschlagen, das ein flächiges Paneel umfasst, an dessen Unterseite mindestens eine Führungsschiene eines Beschattungssystems über einen Kunststoffformabschnitt angebunden ist. Der Kunststoffformabschnitt nimmt eine Klammereinrichtung auf, die die Führungsschiene an dem Paneel hält und die von mindestens einem Einlegeteil des Kunststoffformabschnitts gebildet ist.

Durch die Klammereinrichtung ist in den Kunststoffformabschnitt also ein Mittel integriert, das es ermöglicht, die Führungsschiene mit dem flächigen Paneel zu verbinden bzw. an dem flächigen Paneel zu halten, und das die Führungsschiene an einander abgewandten Flanken umgreifen kann. Der Begriff Klammereinrichtung impliziert, dass die Führungsschiene von insbesondere federelastisch ausgebildeten Abschnitten derselben an ihren Flanken umgriffen ist. Damit wird eine in Querrichtung der Führungsschiene wirkende Haltekraft von der Klammereinrichtung ausgeübt. Bei der Montage kann die Führungsschiene manuell durch einen Montagearbeiter mit der Klammereinrichtung in Eingriff gebracht werden. Schraubprozesse oder dergleichen zur Anbindung der Führungsschiene an die Unterseite des flächigen Paneels sind nicht erforderlich. Die Führungsschiene kann mit geringem Zeitaufwand nach dem Ausformen des Kunststoffformabschnitts, der die Klammereinrichtung als Einlegeteil(e) aufnimmt, montiert werden. Die Montage kann während der Abkühlzeit nach dem Formprozess außerhalb des Formwerkzeugs erfolgen, mittels dessen der Formabschnitt hergestellt wird. Damit können kurze Werkzeugoffenzeiten und schnelle Fertigungszyklen realisiert werden. Da die Montage der Führungsschiene außerhalb des offenen und geheizten Formwerkzeugs erfolgt, erhöht sich auch die Sicherheit für den Montagearbeiter, der die Führungsschiene montiert.

Die Klammereinrichtung kann eine einfache Geometrie aufweisen, so dass auch ein einfaches Werkzeugkonzept zur Integration der Klammereinrichtung in den Kunststoffformabschnitt möglich ist.

Die Klammereinrichtung kann von dem Kunststoffformabschnitt vollständig aufgenommen bzw. umspritzt bzw. umschäumt sein oder auch teilweise aus dem Kunststoffformabschnitt herausragen.

Die Klammereinrichtung ermöglicht eine exakte und reproduzierbare Positionierung der Führungsschiene an dem flächigen Paneel, so dass auch gewährleistet werden kann, dass die Führungsschiene eine exakte Schnittstelle zu einem angrenzenden Bauteil hat.

Die von der Klammereinrichtung gehaltene Führungsschiene kann eine geringe Bauhöhe haben, so dass die von dem Beschattungssystem auf die Führungsschiene wirkenden Hebelkräfte gering sind. Das Risiko einer Verformung und Stauchung der Führungsschiene ist damit gering.

Kräfte, die auf die Führungsschiene wirken, können über die Klammereinrichtung und den Formabschnitt direkt in das flächige Paneel eingeleitet werden. Da keine Schraubflansche oder dergleichen zur Anbindung der Führungsschiene an das flächige Paneel erforderlich sind, sind Hebelarme, auf die die Kräfte wirken, kurz. Dies kann wiederum etwaige Beschädigungen des Formabschnitts und/oder des flächigen Paneels oder auch Deformationen und damit einhergehende Schwergängigkeiten bei einer Betätigung des Beschattungssystems und auch akustische Probleme verhindern.

Bei einer speziellen Ausführungsform des Festdachelements nach der Erfindung hat die Klammereinrichtung mindestens ein Klammerelement, das einen Plattenabschnitt und mindestens eine vorzugsweise federelastische Abkantung aufweist, die eine gegenüber dem Plattenabschnitt abgewinkelte Lasche ist und auf eine Seitenfläche bzw. Flanke der Führungsschiene wirkt. Die Führungsschiene liegt dann mit ihrer Grundfläche bzw. mit ihrer Oberseite im Wesentlichen flächenparallel zu dem Plattenabschnitt des Klammerelements. Die federelastische Abkantung übt die Haltekraft in Querrichtung auf die Führungsschiene aus.

Vorzugweise umfasst das Klammerelement zwei Abkantungen, die an einander abgewandten Seiten angeordnet sind und die Führungsschiene an einander abgewandten Flanken bzw. Seiten umgreifen. Die beiden Abkantungen können in Längsrichtung der Führungsschiene zueinander versetzt sein.

Denkbar ist es auch, dass mehrere Klammerelemente vorgesehen sind, die jeweils nur eine laschenartige Abkantung haben und die an einander abgewandten Flanken an der Führungsschiene direkt oder über dem Kunststoffformabschnitt anliegen.

Bei einer speziellen Ausführungsform des Festdachelements nach der Erfindung, bei der das Klammerelement zwei Abkantungen hat, die jeweils nach Art einer Lasche ausgebildet sind und die Führungsschiene an einander abgewandten Seiten bzw. Flanken umgreifen, ist nur eine der beiden Abkantungen als federndes Element ausgelegt, wohingegen die andere Abkantung als starre, weitgehend formschlüssige Hinterhakung in Hauptlastrichtung ausgeführt ist. Diese Abkantung ist vorzugsweise die an der Innenseite der Führungsschiene anliegende Abkantung, die einem Beschattungselement des Beschattungssystems zugewandt ist. In Dachhochrichtung wirkende Kräfte können damit optimal aufgenommen werden. Gleichzeitig können hohe Haltekräfte zur Verfügung gestellt werden. Durch die federnde Auslegung der an der Außenseite liegenden Abkantung gestaltet sich die Montage der Führungsschiene trotzdem einfach.

Damit die Abkantungen der Klammerelemente bzw. des Klammerelements den Verlauf der Führungsschiene an der Unterseite des Flächenpaneels nicht beeinflussen, hat die mindestens eine Abkantung des Klammerelements in Längsrichtung der Führungsschiene lediglich eine Länge von etwa 10 mm bis 30 mm.

Um die Führungsschiene über ihre Erstreckung an das flächige Paneel anbinden zu können, umfasst die Klammereinrichtung bei einer bevorzugten Ausführungsform des Festdachelements nach der Erfindung mehrere Klammerelemente, die in Längsrichtung der Führungsschiene voneinander beabstandet angeordnet sind und vorzugsweise einen Abstand von etwa 150 mm bis 300 mm voneinander haben. Damit können die Klammerelemente den Verlauf der Führungsschiene an der Unterseite des Flächenpaneels vorgeben.

Die Führungsschiene ist bei einer bevorzugten Ausführungsform des Festdachelements nach der Erfindung ein Kunststoffextrusionsteil, das aus einer zunächst ungebogenen Meterware hergestellt ist. Durch die Verformbarkeit des Kunststoffwerkstoffs bzw. dessen Biegsamkeit können der Verlauf und die Orientierung der Kunststoffschiene in Bezug auf das flächige Paneel durch die Klammereinrichtung vorgegeben sein, die die Führungsschiene an dem flächigen Paneel hält. Damit ist es zum Beispiel auch möglich, dass die Klammereinrichtung eine im Wesentlichen flächenparallele Ausrichtung der Führungsschiene oder auch eine waagerechte Ausrichtung der Führungsschiene an der Unterseite des flächigen Paneels definiert, was wiederum ein bauraumoptimiertes Package der Führungsschiene am Fahrzeugdach ermöglicht. Dies ist bei bisher eingesetzten Strangpressprofilen aus Aluminium nicht möglich, da diese eine hohe Steifigkeit aufweisen. Insbesondere kann das Kunststoffextrusionsteil auch in zwei Raumrichtungen gebogen sein und so einer zweidimensionalen Wölbung des flächigen Paneels folgen.

Um die Gleiteigenschaften der Führungsschiene des Festdachelements nach der Erfindung zu verbessern, kann die Führungsschiene ein Zweikomponenten-Kunststoffextrusionsteil sein. Die beiden Komponenten können nach einem Koextrusionsverfahren miteinander verfügt sein, wobei eine Komponente, die hinsichtlich der Gleiteigenschaften bezüglich des in den Führungskanälen geführten Reibpartners optimiert ausgewählt ist und die Flächen von Führungskanälen der Führungsschiene bildet.

Um die Bauhöhe des Beschattungssystems an der Unterseite des flächigen Paneels weiter zu reduzieren, kann die Führungsschiene des Festdachelements nach der Erfindung beispielsweise einen zumindest angenähert trapezförmigen Querschnitt haben. Eine Basis des Querschnitts ist vorzugsweise parallel zu dem Plattenabschnitt der Klammereinrichtung ausgerichtet, welcher parallel zu dem flächigen Paneel oder auch mit einem definierten Winkel gegenüber dem flächigen Paneel von dem Kunststoffformabschnitt aufgenommen ist.

Um zu verhindern, dass die Führungsschiene im Fahrbetrieb des betreffenden Fahrzeugs Klappergeräusche erzeugt, kann es vorteilhaft sein, dass sich der Kunststoffformabschnitt zumindest weitgehend über die Länge der Führungsschiene erstreckt und die Führungsschiene in Längsrichtung durchgängig an dem Kunststoffformabschnitt anliegt.

Um ein Verrutschen der Führungsschiene gegenüber dem flächigen Paneel in Führungsschienenlängsrichtung zu verhindern, kann eine Fixiereinrichtung vorgesehen sein, die die Führungsschiene gegenüber dem Paneel in Längsrichtung in Position hält. Die Fixiereinrichtung ist beispielsweise durch Dornen oder dergleichen realisiert, die entweder an der Klammereinrichtung oder auch an dem Kunststoffformabschnitt ausgeformt sind und sich in dem Kunststoff der Führungsschiene verkrallen. Die Fixiereinrichtung, die einen Festlagerpunkt der Führungsschiene definiert, erlaubt eine ansonsten schwimmende Lagerung bzw. eine Fest-Los-Lagerung der Führungsschiene, so dass das unterschiedliche thermische Ausdehnungsverhalten des flächigen Paneels, das insbesondere aus einem Glasbauteil gebildet sein kann, und des Kunststoffs der Führungsschiene kompensiert werden kann. Damit können axiale Verspannungen der Führungsschiene, die zu einer unerwünschten Deformation oder einer unerwünschten Wölbung des flächigen Paneels führen könnten, vermieden werden. Um den Festlagerpunkt bzw. die Fixiereinrichtung zu realisieren, ist es auch möglich, einen an dem Kunststoffformabschnitt ausgeformten Ankerpunkt, der mit einer Befräsung, Bohrung oder Ähnlichem der Führungsschiene korrespondiert, vorzusehen.

Der Kunststoffformabschnitt des Festdachelements nach der Erfindung, der die Klammereinrichtung an das flächige Paneel anbindet, ist vorzugsweise aus einem Polyurethanschaumwerkstoff gefertigt und nach einem Schäum- bzw. Spritzgießverfahren an das flächige Paneel angeformt.

Das flächige Paneel selbst ist bei einer bevorzugten Ausführungsform ein Glaspaneel aus einem Einscheibensicherheitsglas oder einem Verbundsicherheitsglas. Alternativ kann das flächige Paneel auch aus einem Kunststoffwerkstoff, wie einem Polycarbonatwerkstoff gefertigt sein.

Bei einer weiteren speziellen Ausführungsform des Festdachelements nach der Erfindung umfasst die Klammereinrichtung ein Kunststoffelement, an dem Klammerrippen ausgeformt sind, an denen die Führungsschiene verrastet ist. Das Kunststoffelement ist insbesondere ein Spritzgießbauteil, an dessen Unterseite die Klammerrippen angeordnet sind, welche seitlich an entsprechenden Flanken bzw. Rippen der betreffenden Führungsschiene anliegen.

Das Kunststoffelement bildet ein Einlegeteil des Kunststoffformabschnitts, der aus einem Kunststoffschaumwerkstoff gebildet sein kann, so dass das nach Art eines Clips ausgebildete Kunststoffelement an das flächige Paneel angeschäumt ist.

Das Kunststoffelement kann eine Basisplatte umfassen, die im Wesentlichen parallel bzw. planparallel zu dem flächigen Paneel ausgerichtet ist. Die Basisplatte kann geschlossen oder auch rahmenartig ausgebildet sein. Beim Anbinden bzw. Anschäumen des Kunststoffelements an das flächige Paneel ist in dem betreffenden Formwerkzeug umlaufend eine einfache Abdichtung möglich, so dass verhindert werden kann, dass der Formwerkstoff, der aus Polyurethan gebildet sein kann, austritt.

In dem Formwerkzeug zum Anbinden des Kunststoffelements an das flächige Paneel müssen keine Schieber eingesetzt werden, da die Hauptentformung im Wesentlichen parallel zur Öffnungsrichtung des Werkzeuges erfolgen kann.

Das Kunststoffelement weist bei einer speziellen Ausführungsform an seiner Oberseite Ankerrippen auf, die in den Kunststoffformabschnitt eingebettet sind. Die Ankerrippen ermöglichen es auch, dass beim Anbinden des Kunststoffelements an das flächige Paneel in dem betreffenden Formwerkzeug ein gleichmäßiger Druck auf das flächige Paneel ausgeübt wird.

Um eine klar definierte Position der Führungsschiene an dem Kunststoffelement zu realisieren, ist bei einer vorteilhaften Ausführungsform an einer Unterseite der Basisplatte eine Stützrippe ausgeformt, an der eine oberseitige Gegenrippe der Führungsschiene insbesondere seitlich anliegt.

Es ist denkbar, dass das Kunststoffelement im Wesentlichen formsteif ausgebildet ist. Insbesondere in diesem Fall ist es vorteilhaft, wenn die Führungsschiene eine elastische Rastrippe umfasst, die mit der Klammereinrichtung bzw. dem Kunststoffelement zusammenwirkt. Die elastische Rastrippe kann durch einen freien Schenkel eines im wesentlichen U-förmigen seitlichen Abschnitts der insbesondere aus Kunststoff gefertigten Führungsschiene gebildet sein.

Die Erfindung hat auch ein Festdachelement für ein Fahrzeugdach zum Gegenstand, das ein flächiges Paneel umfasst, an dessen Unterseite mindestens ein Element eines Beschattungssystems über einen Kunststoffformabschnitt angebunden ist. Der Kunststoffformabschnitt nimmt ein Trägerbauteil auf, an dem das Element des Beschattungssystems verrastet ist und das ein Einlegeteil des Kunststoffformabschnitts ist.

Bei diesem Festdachelement ist also in integrierter Weise eine Basis für ein Element eines Beschattungssystems vorgesehen, so dass die Montage des betreffenden Beschattungssystemelements durch einfaches Verrasten an dem Trägerbauteil möglich ist. Eine aufwendige Montage eines Trägers für das betreffende Element des Beschattungssystems ist nicht erforderlich, da das flächige Paneel mit dem daran angeformten Kunststoffformabschnitt und dem Trägerbauteil schon zur direkten Montage des Elements ausgelegt ist. Ein Schraub- oder Nietprozess ist hierfür nicht erforderlich. Da die Position durch das Formwerkzeug, in dem der Kunststoffformabschnitt ausgeformt wird, eindeutig und präzise vorgegeben ist, kann das Element, das an dem Trägerbauteil verrastet wird, präzise und wiederholgenau an dem flächigen Paneel befestigt werden. Durch das schon an dem flächigen Paneel integrierte Trägerbauteil, an dem das betreffende Element des Beschattungssystems verrastet werden kann, müssen keine weiteren Rahmenbauteile, Schrauben und Schraubdome vorgesehen werden, die eine Montage des betreffenden Elements des Beschattungssystems ermöglichen würden. Der zur Verfügung stehende Bauraum kann so optimal genutzt werden. Dadurch, dass kein Rahmen für das Beschattungssystem vorgesehen werden muss, der an der Innenseite des Flächenpaneels montiert werden müsste, kann das flächige Paneel im Vergleich zum Stand der Technik auch mit einem größeren Durchsichtsbereich ausgelegt werden. Der Wegfall des Rahmens und sonstiger Befestigungselemente führt im Vergleich zu bekannten Systemen auch zu einem geringeren Gewicht des Systems.

Damit das betreffende Element des Beschattungssystems klapperfrei an dem Trägerbauteil montiert sein kann, hat das Trägerbauteil vorzugsweise eine Funktionsfläche, an der das Element des Beschattungssystems anliegt. Die Funktionsfläche bildet eine Stützfläche, an der sich das Element des Beschattungssystems im verrasteten Zustand zumindest abschnittsweise formschlüssig abstützt.

Vorzugsweise hat das Trägerbauteil eine Rastgeometrie, die mit einer Rastgegengeometrie korrespondiert, die an dem Element des Beschattungssystems ausgebildet ist und in die diese Rastgeometrie von unten eingreift.

Um eine dauerhafte wackelfreie Anbindung des Trägerbauteils an den Kunststoffformabschnitt zu gewährleisten, kann es vorteilhaft sein, dass das Trägerbauteil eine Ankergeometrie hat, die von dem Kunststoffformabschnitt bzw. dem Werkstoff des Kunststoffformabschnitts umgriffen ist. Beispielsweise ist die Ankergeometrie aus Rippen, die Hinterschnitte aufweisen, aus sich konisch aufweitenden Zapfen oder dergleichen gebildet.

Das Element des Beschattungssystems, welches an dem Trägerbauteil verrastet ist, ist bei einer speziellen Ausführungsform des Festdachelements nach der Erfindung eine Lagereinrichtung zur Lagerung einer Wickelwelle, ein Element zur Stoffzentrierung oder eine Elektronikkomponente zur Steuerung eines Antriebs des Beschattungssystems.

Weitere Vorteile und vorteilhafte Ausgestaltungen des Gegenstandes der Erfindung sind der Beschreibung, der Zeichnung und den Patentansprüchen zu entnehmen.

Ausführungsbeispiele von Festdachelementen nach der Erfindung sind in der Zeichnung schematisch vereinfacht dargestellt und werden in der nachfolgenden Beschreibung näher erläutert. Es zeigt:
- Figur 1: eine perspektivische Draufsicht auf ein Fahrzeugdach mit einem Festdachelement;
- Figur 2: eine hälftige Unteransicht des Festdachelements mit einer Führungsschiene und einem Lagerelement eines Beschattungssystems;
- Figur 3: eine Figur 2 entsprechende hälftige Unteransicht des Festdachelements, jedoch ohne Führungsschiene und ohne Lagerelement;
- Figur 4: einen Schnitt durch das Festdachelement entlang der Linie IV-IV in Figur 3;
- Figur 5: eine Halteklammer für die Führungsschiene in Alleinstellung;
- Figur 6: eine Führungsschiene mit einer alternativen Ausführungsform einer Halteklammer;
- Figur 7: die Anordnung einer Führungsschiene gegenüber einem Glaselement in einer waagerechten Anordnung (a) und in einer glasparallelen Anordnung (b);
- Figur 8: das Prinzip einer Anbindung einer Rollokomponente an ein Glaselement eines Festdachelements;
- Figur 9: die Anbindung einer Steuerung des Beschattungssystems in dem Bereich IX in Figur 2;
- Figur 10: eine perspektivische Ansicht des Lagersystems an dem Festdachelement in dem Bereich X in Figur 2;
- Figur 11: einen Längsschnitt durch die Anordnung nach Figur 10 entlang der Linie XI-XI in Figur 10;
- Figur 12: einen Kunststoffformabschnitt zusammen mit einem Trägerbauteil für das Lagerelement;
- Figur 13: eine perspektivische Ansicht des Kunststoffformabschnitts mit Trägerbauteil und montiertem Lagerelement des Beschattungssystems;
- Figur 14: eine perspektivische, bereichsweise Unteransicht einer alternativen Ausführungsform eines Festdachelements nach der Erfindung;
- Figur 15: eine Stirnansicht des Festdachelements nach Figur 14 im Bereich der Führungsschiene;
- Figur 16: einen Schnitt durch das Festdachelement nach Figur 14 entlang der Linie XVI-XVI in Figur 14; und
- Figur 17: ein Kunststoffelement einer Klammereinrichtung des Festdachelements nach Figur 14 in einer perspektivischen Darstellung.

In der Zeichnung ist ein Fahrzeugdach 10 dargestellt, welches als Festdach ausgebildet ist, das mit einem Dachausschnitt 12 versehen ist, in welchem ein Festdachelement 14 angeordnet ist. Das Festdachelement 14 ist in dem Dachausschnitt 12 gegenüber einem Fahrzeugaufbau unbeweglich befestigt und umfasst ein Außenhautelement 16, das aus Verbundsicherheitsglas gefertigt ist und eine äußere Sichtfläche des Fahrzeugdachs 10 bildet.

Das Festdachelement 14 weist einen im Wesentlichen rechteckigen Durchsichtsbereich 18 auf, welcher mittels eines Beschattungssystems 20 abschattbar ist, das als Beschattungselement ein Dachrollo 22 umfasst. Das Dachrollo 22 ist bezogen auf eine vertikale Dachlängsmittelebene beidseits jeweils in einer Führungsschiene 24 geführt, die sich in Dachlängsrichtung erstreckt, und mittels eines Zugspriegels 26, der mit seinen Enden jeweils über einen Gleiter in den Führungsschienen 24 geführt ist, zwischen einer Freigabestellung, in der der Durchsichtsbereich 18 vollständig freigegeben ist, und einer Beschattungsstellung verstellbar, in welcher der Durchsichtsbereich 18 zumindest teilweise von dem Dachrollo 22 verdeckt ist.

Das Beschattungssystem 20 weist eine Antriebsanordnung 28 auf, welche zwei Antriebskabel 30A und 30B umfasst, die von einem gemeinsamen Antriebsmotor 32 angetrieben sind, welcher bugseitig von dem Durchsichtsbereich 18 an die Unterseite des Außenhautelements 16 angebunden ist. Die Antriebskabel 30A und 30B sind jeweils mit einem der beidseits angeordneten Gleiter des Zugspriegels 26 verbunden, die in den Führungsschienen 24 geführt sind.

Der Antriebsmotor 32 ist mit einer Steuereinrichtung 34 verbunden, die ebenfalls an der Unterseite des Außenhautelements 16 befestigt ist.

Die Rollobahn des Dachrollos 22 ist mit ihrem dem Zugspriegel 26 abgewandten Rand an einer Wickelwelle 36 befestigt, auf die sie bei der Freigabe des Durchsichtsbereichs 18 aufgewickelt wird und von der sie beim Beschatten des Durchsichtsbereichs 18 abgewickelt wird. Die Wickelwelle 36, die mit einer in Aufwickelrichtung wirkenden Wickelfeder versehen ist, ist mit ihren beiden Enden jeweils an einer Lagereinrichtung 38 gelagert, die an dem von dem Antriebsmotor 32 abgewandten Ende der jeweiligen Führungsschiene 24 an der Unterseite des Außenhautelements 16 befestigt ist. Die Lagereinrichtung 38 dient einerseits zur Lagerung der Wickelwelle 36 und andererseits zur Zentrierung des Stoffs der Rollobahn des Dachrollos 22, so dass diese sauber in die betreffende Führungsschiene 24 einläuft.

An der Unterseite des Außenhautelements 16 ist ein Kunststoffformabschnitt 40 ausgeformt, der aus einem Polyurethanschaumwerkstoff gefertigt ist. Das Anformen des Kunststoffformabschnitts 40 an das Außenhautelement 16 erfolgt in einem Schäumwerkzeug nach einem Schäumprozess bzw. RIM-Prozess (Reaction-Injection-Molding-Prozess).

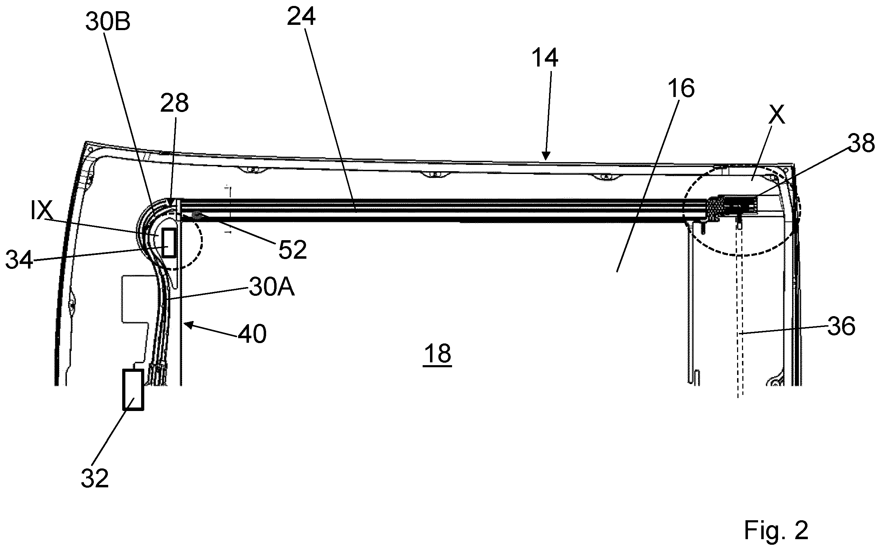

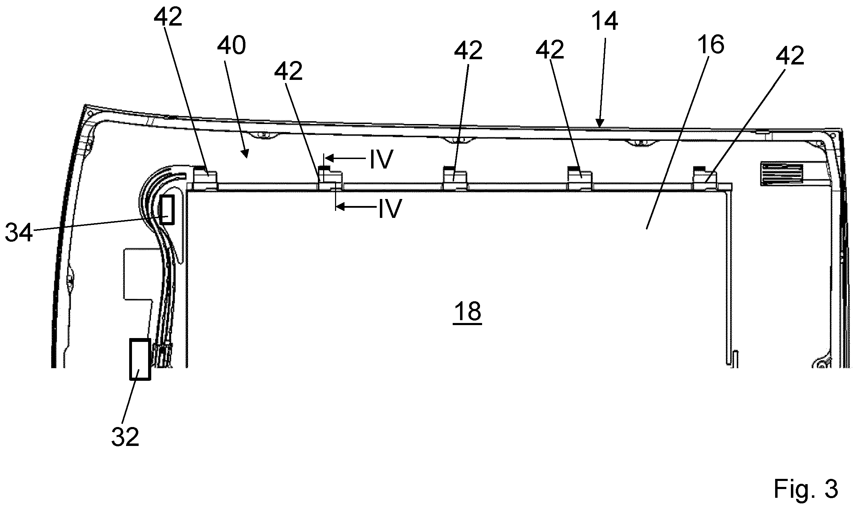

Wie den Figuren 2 bis 4 zu entnehmen ist, nimmt der Kunststoffformabschnitt 40 entlang der Führungsschienen 24 jeweils fünf Klammerelemente 42 auf, mittels derer die betreffende Führungsschiene 24 an dem Außenhautelement 16 unterseitig befestigt ist. Die Klammerelemente 42 bilden zusammen eine Klammereinrichtung, welche die betreffende Führungsschiene 24 in einer waagerechten Anordnung an dem ein flächiges Paneel darstellenden Außenhautelement 16 hält. Die Klammerelemente 42 stellen jeweils ein Einlegeteil des Kunststoffformabschnitts 40 dar.

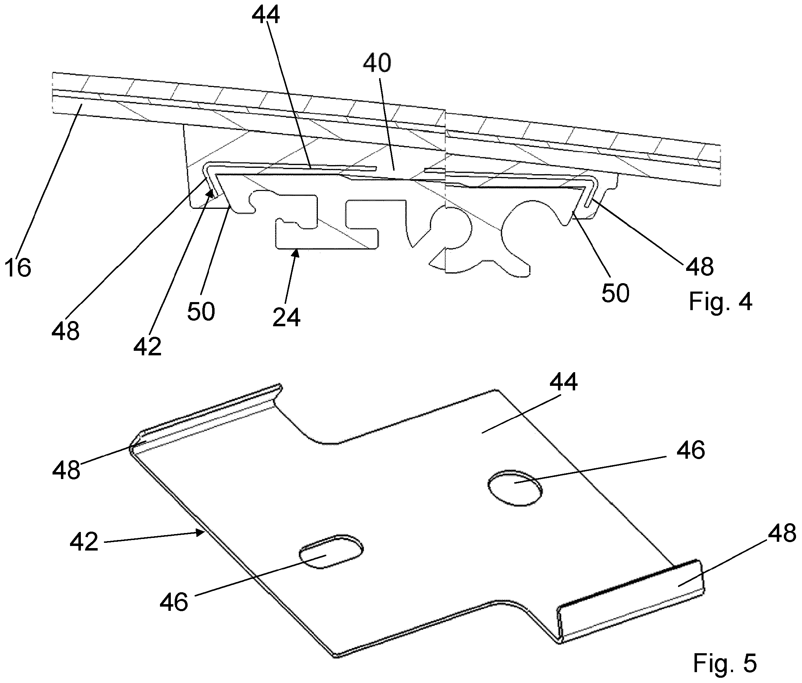

Wie die Figuren 4 und 5 zeigen, umfassen die Klammerelemente 42 jeweils einen im Wesentlichen ebenen Plattenabschnitt 44, der mit zwei Ankerlöchern 46 versehen ist, die von dem Polyurethanwerkstoff des Kunststoffformabschnitts 40 durchgriffen sind. Der Plattenabschnitt 44 geht an zwei sich in Dachlängsrichtung erstreckenden Rändern jeweils in eine federelastische Abkantung 48 über, die in der Montagestellung an einer jeweiligen Flanke 50 der Führungsschiene 24 angreift. Die jeweils eine Lasche bildenden Abkantungen 48 eines Klammerelements 42 sind in Längsrichtung der Führungsschiene 24 zueinander versetzt und haben jeweils eine Länge von etwa 20 mm. Die Klammerelemente 42 sind entlang der Führungsschiene 24 in Abständen von etwa 300 mm angeordnet.

Die Führungsschienen 24 sind jeweils als Kunststoffextrusionsteil ausgebildet, dessen Verlauf und Orientierung in Bezug auf das Außenhautelement 16 durch die Klammerelemente 42 vorgegeben ist.

Wie insbesondere Figur 4 zu entnehmen ist, haben die Führungsschienen 24, welche Führungskanäle für die Gleiter des Zugspriegels 26, für das Dachrollo 22 und das jeweilige Antriebskabel 30A bzw. 30B aufweisen, im weitesten Sinne einen trapezförmigen Querschnitt, wobei eine Basisfläche parallel zum Plattenabschnitt 44 ausgerichtet ist.

Der Kunststoffformabschnitt 40 erstreckt sich über die gesamte Länge der jeweiligen Führungsschiene 24, so dass die Führungsschienen 24 in Längsrichtung durchgängig an dem Kunststoffformabschnitt 40 anliegen. Um ein ungewolltes Verrutschen der Führungsschienen 24 in Längsrichtung zu verhindern, sind die Führungsschienen 24 jeweils in einem bugseitigen Endbereich mittels einer Schraube 52 fixiert. Die Schraube 52 stellt also eine Fixiereinrichtung dar.

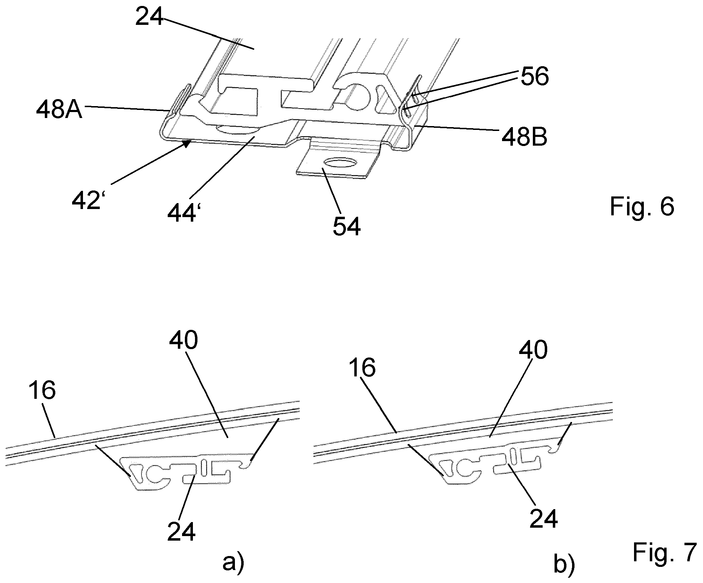

Bei der in Figur 4 dargestellten Ausführungsform haben die Führungsschienen 24 jeweils eine in etwa waagerechte Anordnung. Dies ist auch anhand Figur 7a gezeigt. Die Klammerelemente 42 können aber bei einer alternativen Ausführungsform auch derart in den Kunststoffformabschnitt 40 integriert sein, dass die Plattenabschnitte 44 jeweils glasparallel ausgerichtet sind, so dass die über die Klammerelemente 42 fixierten Führungsschienen 24 ebenfalls eine glasparallele Ausrichtung haben, wie anhand von Figur 7b dargestellt ist. Auch eine Anbringung der Führungsschienen 24 in einer beliebigen anderen Winkelstellung gegenüber dem Außenhautelement 16 ist denkbar.

In Figur 6 ist ein alternatives Klammerelement 42' dargestellt, welches anstelle des vorstehend beschriebenen Klammerelements zur Fixierung der Führungsschienen 24 an dem Außenhautelement 16 eingesetzt werden kann. Das Klammerelement 42 hat ebenfalls einen Plattenabschnitt 44', der mit Ankerlaschen 54 versehen ist, welche im Montagezustand von dem Kunststoffformabschnitt 40 durchgriffen und umformt sind. An einander abgewandten Rändern weist das Klammerelement 42' jeweils eine laschenartige Abkantung 48A bzw. 48B auf, wobei die Abkantung 48A starr ausgebildet ist und die Abkantung 48B federelastisch ausgebildet ist und mit Haltedornen 56 versehen ist, die sich in Montagestellung in dem Kunststoffwerkstoff der betreffenden Führungsschiene 24 verkrallen. Bei der Montage wird die Führungsschiene 24 mit einer Flanke 50 unter die Abkantung 48B geführt und dann durch elastische Verformung der Abkantung 48B in ihre an dem Plattenabschnitt 44' anliegende Montagestellung gebracht.

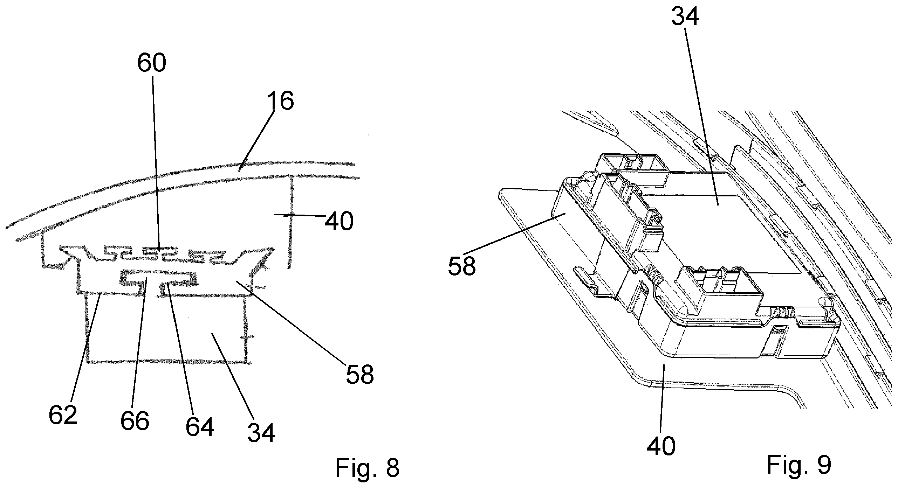

Wie insbesondere Figur 9 zu entnehmen ist, ist die Steuereinrichtung 34 an einem Trägerbauteil 58 verrastet, welches ein Einlegeteil des Kunststoffformabschnitts 40 im Bereich des bugseitigen Randes des Durchsichtsbereichs 18 darstellt. Die Prinzipdarstellung in Figur 8 zeigt, dass das Trägerbauteil 58 Ankerrippen 60 aufweist, die Hinterschnitte ausbilden und von dem Polyurethanwerkstoff des Kunststoffformabschnitts 40 umgriffen sind. Das Trägerbauteil 58 hat eine Stützfläche 62, an der die Steuereinrichtung 34 anliegt. Zudem weist das Trägerbauteil 58 eine im Querschnitt T-förmige Rastgeometrie 64 auf, in welche eine Rastgegengeometrie 66 der Steuereinrichtung 34 eingreift.

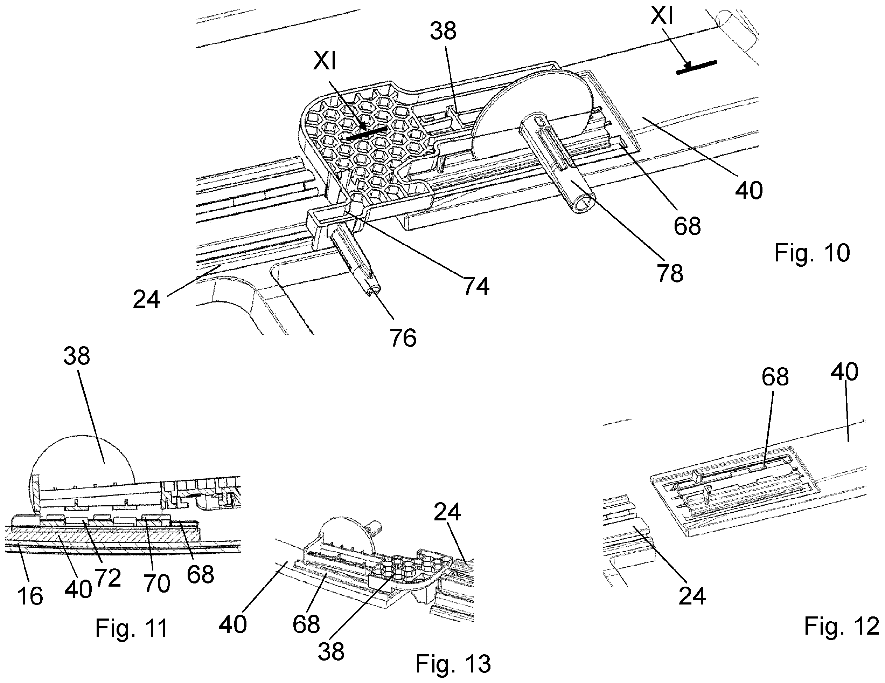

Wie die Figuren 10 bis 13 zeigen, sind die Lagereinrichtungen 38 für die Wickelwelle 36 ebenfalls am Trägerbauteil 68 verrastet, welches ein Einlegeteil des den Durchsichtsbereich 18 rahmenartig umschließenden Kunststoffformabschnitts 40 darstellt. Das Trägerbauteil 68 hat eine Rastgeometrie 70, in welche eine Rastgegengeometrie 72 der betreffenden Lagereinrichtung 38 eingreift, so dass die Lagereinrichtung 38 verliersicher an die Unterseite des Außenhautelements 16 angebunden ist. Mit einem Fortsatz 74 stützen sich die Lagereinrichtungen 38 an der jeweils zugeordneten Führungsschiene 24 ab. An dem Fortsatz 74 ist auch ein Zapfen 76 zur Befestigung einer Querstrebe angeordnet, die eine Ablaufkante für das Dachrollo 22 bildet. Ein Zapfen 78 dient zur Lagerung der Wickelwelle 36 an der Lagereinrichtung 38.

Wie die vorstehende Beschreibung zeigt, ist es durch die Aufnahme der Trägerbauteile 58 und 68 und die Aufnahme der Klammerelemente 42 bzw. 42' in den ein- oder mehrteiligen Kunststoffformabschnitt 40 möglich, das Festdachelement 14 bzw. das Außenhautelement 16 in einfacher und manueller Weise mit den Bestandteilen des Beschattungssystems 20 zu bestücken, und zwar durch Verrasten an den von dem Kunststoffformabschnitt 40 aufgenommenen Einlegeteilen. Ein zusätzlicher Rahmen für das Beschattungssystem 20 ist nicht erforderlich.

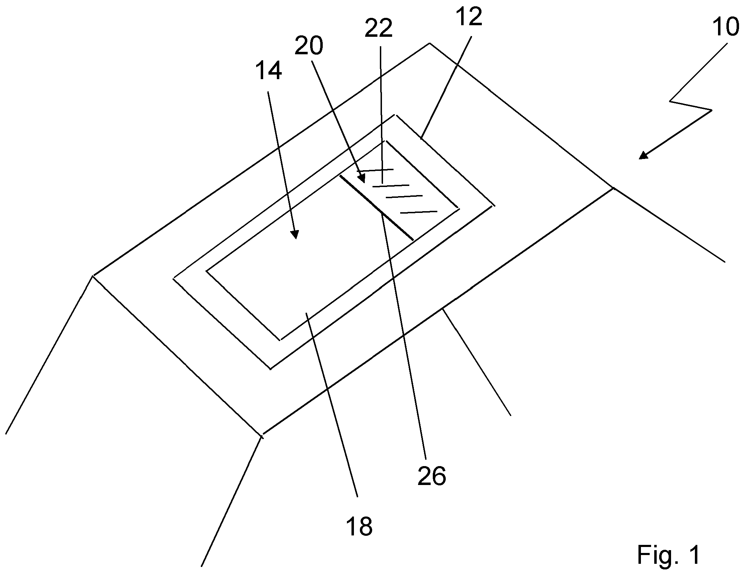

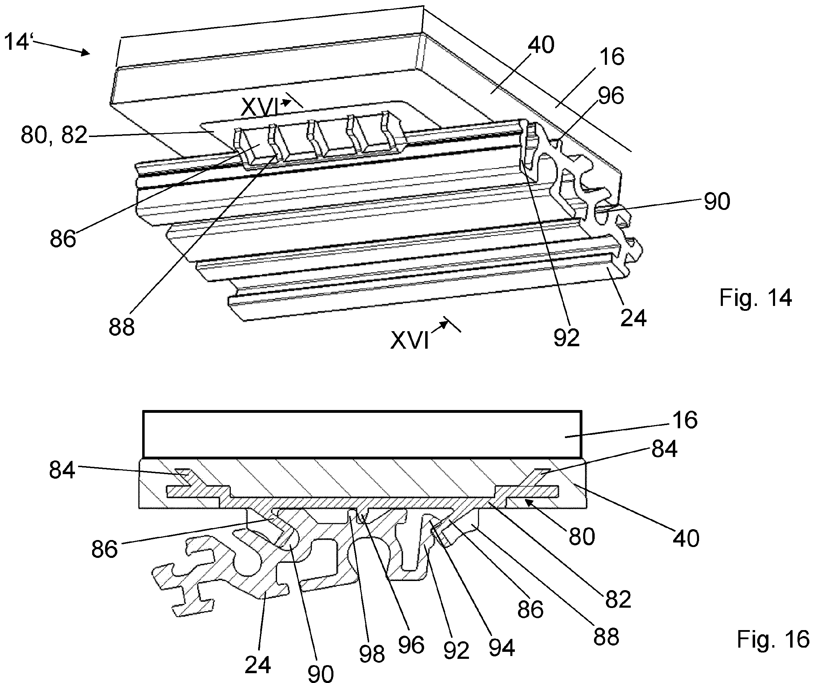

In den Figuren 14 bis 17 ist ein Festdachelement 14' dargestellt, das Bestandteil eines Fahrzeugdachs der in Figur 1 dargestellten Art ist und ebenfalls in einem Dachausschnitt gegenüber einem Fahrzeugaufbau unbeweglich befestigt ist und ein Dachhautelement 16 aufweist, das aus Verbundsicherheitsglas oder einem Einscheibensicherheitsglas gefertigt ist und eine äußere Sichtfläche des Fahrzeugdachs bildet.

Entsprechend der oben beschriebenen Ausführungsform weist auch das Festdachelement 14' einen im Wesentlichen rechteckigen Durchsichtsbereich auf, welcher mittels eines Beschattungssystems abschattbar ist, das als Beschattungselement ein Dachrollo umfasst. Das Dachrollo ist bezogen auf eine vertikale Dachlängsmittelebene beidseits jeweils in einer Führungsschiene 24 geführt, die sich in Dachlängsrichtung erstreckt, und mittels eines Zugspriegels, der mit seinen Enden jeweils über einen Gleiter in den Führungsschienen 24 geführt ist, zwischen einer Freigabestellung, in der der Durchsichtsbereich vollständig freigegeben ist, und einer Beschattungsstellung verstellbar, in welcher der Durchsichtsbereich zumindest teilweise von dem Dachrollo verdeckt ist.

In nicht dargestellter Weise weist das Beschattungssystem des in den Figuren 14 bis 17 dargestellten Festdachelements 14' eine Antriebsanordnung auf, die zwei Antriebskabel umfasst, die von einem gemeinsamen Antriebsmotor angetrieben sind, welcher bugseitig des Durchsichtsbereichs an die Unterseite des Dachhautelements 16 angebunden ist. Die Antriebskabel sind jeweils mit einem der beidseits angeordneten Gleiter des Zugspriegels verbunden, die in den Führungsschienen 24 geführt sind. Der Antriebsmotor ist mit einer Steuereinrichtung verbunden, die ebenfalls an der Unterseite des Dachhautelements 16 befestigt ist. Insofern entspricht das Festdachelement 14' dem oben beschriebenen Festdachelement.

Die Rollobahn des Dachrollos ist ebenfalls entsprechend dem oben beschriebenen Ausführungsbeispiel mit ihrem dem Zugspriegel abgewandten Rand an einer Wickelwelle befestigt, auf die sie bei der Freigabe des Durchsichtsbereichs aufgewickelt ist und von der sie beim Beschatten des Durchsichtsbereichs abgewickelt wird.

An die Unterseite des Dachhautelements 16 ist ein Kunststoffformabschnitt 40 angeformt, der aus einem Polyurethanschaumwerkstoff gebildet ist. Das Anformen des Kunststoffformabschnitts 40 an das Dachhautelement 16 erfolgt in einem Schäumwerkzeug nach einem Schäumprozess bzw. RIM-Prozess (Reaction-Injection-Molding-Prozess).

Über die Erstreckung der Führungsschienen nimmt der Kunststoffformabschnitt 40 jeweils mehrere Kunststoffelemente 80 auf, die Bestandteil einer Klammereinrichtung sind und jeweils ein Einlegeteil des Kunststoffformabschnitts 40 bilden.

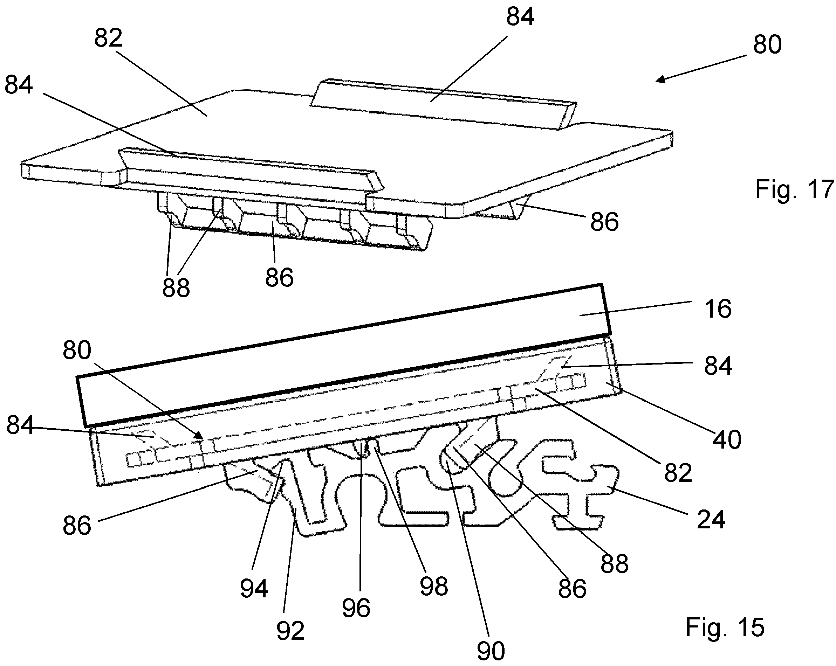

Die Kunststoffelemente 80 umfassen jeweils eine Basisplatte 82, welche rahmenartig oder geschlossen ausgebildet sein kann und welche im Wesentlichen planparallel zu dem ein flächiges Paneel darstellenden Dachhautelement 16 ausgerichtet ist. An der Oberseite der Basisplatte 82 sind zwei sich in Längsrichtung der betreffenden Führungsschiene 24 erstreckende Ankerrippen 84 ausgeformt, die jeweils gegenüber der Ebene der Basisplatte 82 geneigt sind und von dem Kunststoffformabschnitt 40 umgriffen sind, dessen Sichtfläche flächenbündig zur Sichtfläche der Basisplatte 82 angeordnet ist. Unterseitig sind an der Basisplatte 82 zwei sich in Längsrichtung der betreffenden Führungsschiene 24 erstreckende Klammerrippen 86 ausgeformt, welche, wie insbesondere die Figuren 15 und 16 zeigen, ebenfalls gegenüber der Basisplatte 82 geneigt sind und aufeinander zulaufen.

Die Klammerrippen 86 sind an ihren Außenseiten jeweils mit Versteifungsrippen 88 versehen.

Die bezogen auf die vertikale Fahrzeugdachlängsmittelebene innen liegende Klammerrippe 86 greift in einen Haltekanal 90 ein, welcher an der Oberseite der Führungsschiene 24 ausgeformt ist. Die bezogen auf die vertikale Fahrzeugdachlängsmittelebene außen liegende Klammerrippe 86 wirkt mit einer außen liegenden Rastrippe 92 der Führungsschiene 24 zusammen, welche durch einen freien Schenkel eines außen liegenden U-förmigen Abschnitts der Führungsschiene 24 gebildet ist und an ihrem oberen Endbereich einen im Querschnitt nasenartigen, nach außen weisenden Vorsprung 94 aufweist.

Des Weiteren umfasst das Kunststoffelement 80 an der Unterseite der Basisplatte 82 eine sich in Längsrichtung der Führungsschiene 24 erstreckende Stützrippe 96, an der eine oberseitige Gegenrippe 98 der Führungsschiene 24 seitlich anliegt.

Die den beiden Führungsschienen 24 zugeordneten Kunststoffelemente 80 sind Gleichteile, die jeweils bezogen auf eine Mittelebene, die die Stützrippe 96 schneidet, spiegelsymmetrisch ausgebildet sind.

### Bezugszeichenliste

- 10: Fahrzeugdach
- 12: Dachausschnitt
- 14, 14': Festdachelement
- 16: Dachhautelement, Außenhautelement
- 18: Durchsichtsbereich
- 20: Beschattungssystem
- 22: Dachrollo
- 24: Führungsschiene
- 26: Zugspriegel
- 28: Antriebsanordnung
- 30A, B: Antriebskabel
- 32: Antriebsmotor
- 34: Steuereinrichtung
- 36: Wickelwelle
- 38: Lagereinrichtung
- 40: Kunststoffformabschnitt
- 42, 42': Klammerelement
- 44, 44': Plattenabschnitt
- 46: Ankerloch
- 48, 48A, B: Abkantung
- 50: Flanke
- 52: Schraube
- 54: Ankerlasche
- 56: Haltedorn
- 58: Trägerbauteil
- 60: Ankerrippe
- 62: Stützfläche
- 64: Rastgeometrie
- 66: Rastgegengeometrie
- 68: Trägerbauteil
- 70: Rastgeometrie
- 72: Rastgegengeometrie
- 74: Fortsatz
- 76: Zapfen
- 78: Zapfen
- 80: Kunststoffelement
- 82: Basisplatte
- 84: Ankerrippe
- 86: Klammerrippe
- 88: Versteifungsrippe
- 90: Haltekanal
- 92: Rastrippe
- 94: Vorsprung
- 96: Stützrippe
- 98: Gegenrippe

## Patentansprüche

1. Festdachelement für ein Fahrzeugdach, umfassend ein flächiges Paneel, an dessen Unterseite mindestens eine Führungsschiene (24) eines Beschattungssystems (20) über einen Kunststoffformabschnitt (40) angebunden ist, **dadurch gekennzeichnet, dass** der Kunststoffformabschnitt (40) eine Klammereinrichtung aufnimmt, die die Führungsschiene (24) an dem Paneel hält und die von mindestens einem Einlegeteil des Kunststoffformabschnitts (40) gebildet ist.

2. Festdachelement nach Anspruch 1, **dadurch gekennzeichnet, dass** die Klammereinrichtung mindestens ein Klammerelement (42, 42') umfasst, das einen Plattenabschnitt (44, 44') und mindestens eine insbesondere federelastische Abkantung (48, 48B) aufweist, die auf eine Flanke (50) der Führungsschiene (24) wirkt, und die vorzugsweise in Längsrichtung der Führungsschiene (24) eine Länge von 10 mm bis 30 mm hat.

3. Festdachelement nach Anspruch 2, **dadurch gekennzeichnet, dass** das Klammerelement (42, 42') zwei Abkantungen (48, 48A, 48B) an einander abgewandten Seiten umfasst, wobei die beiden Abkantungen (48) vorzugsweise in Längsrichtung der Führungsschiene (24) zueinander versetzt sind.

4. Festdachelement nach Anspruch 2 oder 3, **dadurch gekennzeichnet, dass** die Klammereinrichtung mehrere Klammerelemente (42, 42') umfasst, die in Längsrichtung der Führungsschiene (24) voneinander beabstandet angeordnet sind und vorzugsweise einen Abstand von etwa 150 mm bis 300 mm voneinander haben.

5. Festdachelement nach einem der Ansprüche 1 bis 4, **dadurch gekennzeichnet, dass** die Führungsschiene (24) ein Kunststoffextrusionsteil ist, dessen Verlauf und Orientierung in Bezug auf das flächige Paneel durch die Klammereinrichtung vorgegeben ist und das ein Zweikomponenten-Kunststoffextrusionsteil ist.

6. Festdachelement nach einem der Ansprüche 1 bis 5, **dadurch gekennzeichnet, dass** die Führungsschiene (24) zumindest in einem Bereich der Klammerelemente (42, 42') einen zumindest angenähert trapezförmigen Querschnitt hat.

7. Festdachelement nach einem der Ansprüche 1 bis 6, **dadurch gekennzeichnet, dass** sich der Kunststoffformabschnitt (40) zumindest weitgehend über die Länge der Führungsschiene (24) erstreckt und die Führungsschiene (24) in Längsrichtung segmentweise oder durchgängig an dem Kunststoffformabschnitt (40) anliegt.

8. Festdachelement nach einem der Ansprüche 1 bis 7, **gekennzeichnet durch** eine Fixiereinrichtung, die die Führungsschiene (24) gegenüber dem Paneel in Längsrichtung in Position hält.

9. Festdachelement nach einem der Ansprüche 1 bis 8, **dadurch gekennzeichnet, dass** die Klammereinrichtung ein Kunststoffelement (80) umfasst, an dem Klammerrippen (86) ausgeformt sind, an denen die Führungsschiene (24) verrastet ist,
wobei an einer Oberseite des Kunststoffelements (80) vorzugsweise Ankerrippen (84) ausgeformt sind, die in den Kunststoffformabschnitt (40) eingebettet sind, wobei das Kunststoffelement (80) vorzugsweise eine Basisplatte (82) umfasst, die zumindest im Wesentlichen parallel zu dem flächigen Paneel ausgerichtet ist, wobei an einer Unterseite der Basisplatte (82) vorzugsweise eine Stützrippe (96) ausgeformt ist, an der eine oberseitige Gegenrippe (98) der Führungsschiene (24) anliegt.

10. Festdachelement nach einem der Ansprüche 1 bis 9, **dadurch gekennzeichnet, dass** die Führungsschiene (24) eine elastische Rastrippe (92) umfasst, die mit der Klammereinrichtung zusammenwirkt.

11. Festdachelement für ein Fahrzeugdach, umfassend ein flächiges Paneel, an dessen Unterseite mindestens ein Element eines Beschattungssystems (20) über einen Kunststoffformabschnitt (40) angebunden ist, **dadurch gekennzeichnet, dass** der Kunststoffformabschnitt (40) ein Trägerbauteil (58, 68) aufnimmt, an dem das Element des Beschattungssystems (20) verrastet ist und das ein Einlegeteil des Kunststoffformabschnitts (40) ist.

12. Festdachelement nach Anspruch 11, **dadurch gekennzeichnet, dass** das Trägerbauteil (58, 68) eine Stützfläche (62) hat, an der das Element des Beschattungssystems (20) anliegt.

13. Festdachelement nach Anspruch 11 oder 12, **dadurch gekennzeichnet, dass** das Trägerbauteil (58, 68) eine Rastgeometrie (64, 70) aufweist, in die das Element des Beschattungssystems (20) mit einer Rastgegengeometrie (66, 72) von unten eingreift.

14. Festdachelement nach einem der Ansprüche 11 bis 13, **dadurch gekennzeichnet, dass** das Trägerbauteil (58, 68) eine Ankergeometrie aufweist, die von dem Kunststoffformabschnitt (40) umgriffen ist.

15. Festdachelement nach einem der Ansprüche 11 bis 14, **dadurch gekennzeichnet, dass** das Element des Beschattungssystems (20) eine Lagereinrichtung (38) zur Lagerung einer Wickelwelle, ein Element zur Stoffzentrierung einer Rollobahn oder eine Elektronikkomponente zur Steuerung eines Antriebs des Beschattungssystems (20) ist.

## Claims

1. A fixed roof element for a vehicle roof, said fixed roof element comprising a panel to the underside of which at least one guide rail (24) of a shading system (20) is joined via a plastic moulded portion (40), **characterised in that** the plastic moulded portion (40) receives a clamping unit, which keeps the guide rail (24) at the panel and which is formed by at least one insert part of the plastic moulded portion (40).

2. The fixed roof element according to claim 1, **characterised in that** the clamping unit comprises at least one clamping element (42, 42'), which includes a plate portion (44, 44') and at least one angled portion (48, 48B), which is in particular resilient and acts on a flank (50) of the guide rail (24) and which preferably has a length of 10 mm to 30 mm in the longitudinal direction of the guide rail (24).

3. The fixed roof element according to claim 2, **characterised in that** the clamping element (42, 42') comprises two angled portions (48, 48A, 48B) on opposite sides, said two angled portions (48) preferably being offset from each other in the longitudinal direction of the guide rail (24).

4. The fixed roof element according to claim 2 or 3, **characterised in that** the clamping unit comprises multiple clamping elements (42, 42'), which are disposed in such a way that they are spaced apart from each other in the longitudinal direction of the guide rail (24) and which preferably have a distance of approximately 150 mm to 300 mm between each other.

5. The fixed roof element according to any one of the claims 1 to 4, **characterised in that** the guide rail (24) is an extruded plastic part, the course and orientation of said extruded plastic part in relation to the panel being determined by the clamping unit and said extruded plastic part being a two-component extruded plastic part.

6. The fixed roof element according to any one of the claims 1 to 5, **characterised in that** the guide rail (24) has an at least nearly trapezoidal cross-section at least in an area of the clamping elements (42, 42').

7. The fixed roof element according to any one of the claims 1 to 6, **characterised in that** the plastic moulded portion (40) at least widely extends over the length of the guide rail (24) and **in that** the guide rail (24) rests against segments of the plastic moulded portion (40) or continuously rests against the plastic moulded portion (40) in the longitudinal direction.

8. The fixed roof element according to any one of the claims 1 to 7, **characterised by** a fixing unit which keeps the guide rail (24) in position with respect to the panel in the longitudinal direction.

9. The fixed roof element according to any one of the claims 1 to 8, **characterised in that** the clamping unit comprises a plastic element (80), on which clamping ribs (86) are formed, on which the guide rail (24) is locked, anchor ribs (84) preferably being formed on an upper side of the plastic element (80), said anchor ribs (84) being embedded into the plastic moulded portion (40), the plastic element (80) preferably comprising a base plate (82), which has an at least substantially parallel orientation with respect to the panel, a supporting rib (96) preferably being formed on an underside of the base plate (82), an upper-side counter-rib (98) of the guide rail (24) resting against said supporting rib (96).

10. The fixed roof element according to any one of the claims 1 to 9, **characterised in that** the guide rail (24) comprises an elastic locking rib (92), which interacts with the clamping unit.

11. A fixed roof element for a vehicle roof, said fixed roof element comprising a panel to the underside of which at least one element of a shading system (20) is joined via a plastic moulded portion (40), **characterised in that** the plastic moulded portion (40) receives a support component (58, 68) at which the element of the shading system (20) is locked and which is an insert part of the plastic moulded portion (40).

12. The fixed roof element according to claim 11, **characterised in that** the support component (58, 68) has a supporting surface (62) against which the element of the shading system (20) rests.

13. The fixed roof element according to claim 11 or 12, **characterised in that** the support component (58, 68) has a locking geometry (64, 70), into which the element of the shading system (20) reaches from below with a locking counter-geometry (66, 72).

14. The fixed roof element according to any one of the claims 11 to 13, **characterised in that** the support component (58, 68) has an anchor geometry around which the plastic moulded portion (40) reaches.

15. The fixed roof element according to any one of the claims 11 to 14, **characterised in that** the element of the shading system (20) is a bearing unit (38) for bearing a winding shaft, an element for centring the fabric of a roller blind web or an electronic component for controlling a drive of the shading system (20).

## Revendications

1. Élément de toit fixe pour un toit de véhicule, l'élément de toit fixe comprenant un panneau à la face inférieure duquel au moins un rail de guidage (24) d'un système d'ombrage (20) est raccordé par une partie (40) moulée en matière plastique, **caractérisé en ce que** la partie (40) moulée en matière plastique reçoit un organe de serrage qui maintient le rail de guidage (24) sur le panneau et qui est formé par au moins un insert de la partie (40) moulée en matière plastique.

2. Élément de toit fixe selon la revendication 1, **caractérisé en ce que** l'organe de serrage comprend au moins un élément de serrage (42, 42') ayant une partie de plaque (44, 44') et au moins une partie pliée (48, 48B), qui est notamment élastique à ressort et qui agit sur un flanc (50) du rail de guidage (24) et qui a, de préférence, une longueur de 10 mm à 30 mm dans la direction longitudinale du rail de guidage (24).

3. Élément de toit fixe selon la revendication 2, **caractérisé en ce que** l'élément de serrage (42, 42') comprend deux parties pliées (48, 48A, 48B) sur des côtés opposés, les deux parties pliées (48) étant, de préférence, décalées l'une par rapport à l'autre dans la direction longitudinale du rail de guidage (24).

4. Élément de toit fixe selon la revendication 2 ou 3, **caractérisé en ce que** l'organe de serrage comprend plusieurs éléments de serrage (42, 42'), qui sont espacés l'un de l'autre dans la direction longitudinale du rail de guidage (24) et qui ont, de préférence, une distance d'environ 150 mm à 300 mm l'un de l'autre.

5. Élément de toit fixe selon l'une quelconque des revendications 1 à 4, **caractérisé en ce que** le rail de guidage (24) est une pièce extrudée en matière plastique, le tracé et l'orientation de la pièce extrudée en matière plastique par rapport au panneau étant prédéfinis par l'organe de serrage et la pièce extrudée en matière plastique étant une pièce extrudée en matière plastique à deux composants.

6. Élément de toit fixe selon l'une quelconque des revendications 1 à 5, **caractérisé en ce que** le rail de guidage (24) a une section transversale au moins approximativement trapézoïdale au moins dans la zone des éléments de serrage (42, 42').

7. Élément de toit fixe selon l'une quelconque des revendications 1 à 6, **caractérisé en ce que** la partie (40) moulée en matière plastique s'étend au moins largement sur la longueur du rail de guidage (24) et le rail de guidage (24) est en contact avec la partie (40) moulée en matière plastique par segments ou de manière continue dans la direction longitudinale.

8. Élément de toit fixe selon l'une quelconque des revendications 1 à 7, **caractérisé par** un organe de fixation qui maintient le rail de guidage (24) en position dans la direction longitudinale par rapport au panneau.

9. Élément de toit fixe selon l'une quelconque des revendications 1 à 8, **caractérisé en ce que** l'organe de serrage comprend un élément (80) en matière plastique sur lequel sont formées des nervures des serrage (86) sur lesquelles le rail de guidage (24) est encliqueté, des nervures d'ancrage (84) étant, de préférence, formées sur une face supérieure de l'élément (80) en matière plastique, les nervures d'ancrage (84) étant encastrées dans la partie (40) moulée en matière plastique, l'élément (80) en matière plastique comprenant, de préférence, une plaque de base (82), qui est orienté au moins essentiellement parallèlement au panneau, une nervure d'appui (96) étant, de préférence, formée sur une face inférieure de la plaque de base (82), une contre-nervure (98) supérieure du rail de guidage (24) étant en contact avec la nervure d'appui (96).

10. Élément de toit fixe selon l'une quelconque des revendications 1 à 9, **caractérisé en ce que** le rail de guidage (24) comprend une nervure d'encliquetage (92) élastique qui interagit avec l'organe de serrage.

11. Élément de toit fixe pour un toit de véhicule, l'élément de toit fixe comprenant un panneau à la face inférieure duquel au moins un élément d'un système d'ombrage (20) est raccordé par une partie (40) moulée en matière plastique, **caractérisé en ce que** la partie (40) moulée en matière plastique reçoit un composant de support (58, 68) sur lequel l'élément du système d'ombrage (20) est encliqueté et qui est un insert de la partie (40) moulée en matière plastique.

12. Élément de toit fixe selon la revendication 11, **caractérisé en ce que** le composant de support (58, 68) a une surface d'appui (62) avec laquelle l'élément du système d'ombrage (20) est en contact.

13. Élément de toit fixe selon la revendication 11 ou 12, **caractérisé en ce que** le composant de support (58, 68) a une géométrie d'encliquetage (64, 70) dans laquelle l'élément du système d'ombrage (20) est en prise par le bas avec une contre-géométrie d'encliquetage (66, 72).

14. Élément de toit fixe selon l'une quelconque des revendications 11 à 13, **caractérisé en ce que** le composant de support (58, 68) a une géométrie d'ancrage autour de laquelle la partie (40) moulée en matière plastique est en prise.

15. Élément de toit fixe selon l'une quelconque des revendications 11 à 14, **caractérisé en ce que** l'élément du système d'ombrage (20) est un organe palier (38) pour monter un arbre d'enroulement, un élément pour centrer un tissue d'une bande de store ou un composant électronique pour commander un entraînement du système d'ombrage (20).
